(19)

Europäisches
Patentamt
European
Patent Office
Office européen
des brevets

(11) **EP 4 530 677 B1**

(12) **EUROPEAN PATENT SPECIFICATION**

(45) Date of publication and mention
of the grant of the patent:
**15.04.2026  Bulletin 2026/16**

(21) Application number: **24199434.2**

(22) Date of filing: **10.09.2024**

(51) International Patent Classification (IPC):
*G01S 17/86* (2020.01)    *G01S 11/12* (2006.01)
*G01S 7/497* (2006.01)    *G01S 17/10* (2020.01)
*G01S 7/4865* (2020.01)    *G01S 15/86* (2020.01)
*G01S 15/10* (2006.01)    *G01S 7/526* (2006.01)

(52) Cooperative Patent Classification (CPC):
**G01S 7/4865; G01S 7/497; G01S 7/526;
G01S 11/12; G01S 15/10; G01S 15/86;
G01S 17/10; G01S 17/86**

(54) **MEASURING DEVICE FOR MEASURING THE DISTANCE OF A USER, AND RELATED
MEASURING METHOD**

MESSVORRICHTUNG ZUR MESSUNG DES ABSTANDES EINES BENUTZERS UND
ENTSPRECHENDES MESSVERFAHREN

DISPOSITIF DE MESURE POUR MESURER LA DISTANCE D'UN UTILISATEUR ET PROCÉDÉ DE
MESURE ASSOCIÉ

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority:  **27.09.2023  IT 202300019947**

(43) Date of publication of application:
**02.04.2025  Bulletin 2025/14**

(73) Proprietor: **STMicroelectronics International N.V.
1228 Plan-les-Ouates, Geneva (CH)**

(72) Inventors:
• **GUADALUPI, Carlo
  20018 SEDRIANO (MI) (IT)**
• **RIVOLTA, Stefano Paolo
  20832 DESIO (MB) (IT)**
• **LABOMBARDA, Andrea
  20155 MILANO (IT)**

(74) Representative: **Studio Torta S.p.A.
Via Viotti, 9
10121 Torino (IT)**

(56) References cited:
**EP-A1- 2 959 459        EP-A1- 3 433 571
JP-A- 2014 149 761**

EP 4 530 677 B1

**Description**

TECHNICAL FIELD

The present invention relates to a measuring device for measuring the distance of a user. Furthermore, it relates to an electronic apparatus comprising the measuring device, to a measuring method implemented by the measuring device and to a related computer program product.

STATE OF THE ART

As known, energy consumption is a critical parameter to be assessed in the design of electronic equipment such as PCs, soundbars, smart appliances, IoT apparatuses, where it is required to minimize energy consumption yet without reducing the functionality that these electronic equipments may offer.

Consequently, these electronic apparatuses are often automatically controlled as a function of some external factors, such as the presence of a user in proximity of the electronic apparatuses, in order to minimize energy consumptions. For example, the screen of a PC may be automatically activated or deactivated on the basis of whether or not the user is in proximity to the PC and in particular whether or not he/she is in a use position of the PC (i.e. within a predefined range of distance from the PC and in front of the screen). In this manner, the time in which the PC screen remains on without the PC being actually used is minimized and this allows the overall energy consumption of the PC to be reduced.

Several known solutions are available to automatically control such electronic apparatuses on the basis of measurements of distance, or at least of presence/absence, of the user from the same electronic apparatuses.

For example, using "Thermal MOS", TMOS, sensors is known to detect the presence of the user in a predetermined zone.

The TMOS sensor is a known infrared sensor suitable for detecting the presence and movement of the user. In particular, the TMOS detects the intensity of the infrared, IR, radiation, emitted by a hot body (for example, the user of the electronic apparatus) present in a field of view (FoV) of the TMOS. The TMOS has low energy consumption (e.g., about 20 $\mu$A) and a wide field of view (e.g., with a detection angle of about 80°) but cannot generally be used for measuring the distance of the person from the sensor since the intensity of the IR radiation does not solely depend on the distance of the user from the sensor, but rather also depends on external factors such as environmental temperature and humidity and is subject to drift over time. In general, this is due to the fact that this IR sensor is not capable of measuring the absolute distance of the user from the TMOS sensor but may rather detect the intensity of the IR radiation generated by the bodies emitting IR radiation (which is indicative of their temperature and is correlated to their distance from the TMOS sensor).

For this reason, the TMOS is not used in applications that require accurate measurements of the distance of the user but is rather used to detect the presence or absence of the user within a predefined distance range.

A sensor that is instead commonly used to measure the distance of objects or people is a Time of Flight (ToF) sensor. The ToF sensor may be based on different technologies, such as ultrasonic technology or optical technology.

In the exemplary case of the ultrasonic ToF sensor, it comprises an emitter configured to emit ultrasounds towards the body to be detected, and a receiver configured to receive the ultrasounds which, after being emitted by the emitter, have been reflected by the body to be detected. The ultrasonic ToF sensor measures the time of flight of the ultrasounds (i.e. the time interval elapsing between the emission of the ultrasounds by the emitter and their reception by the receiver) and calculates the distance of the body with respect to the ToF sensor on the basis of the time of flight measured. The operating principle of the optical ToF sensor is completely similar to that of the ultrasonic ToF sensor but, instead of being based on the emission and reception of ultrasonic waves, it is based on the emission and reception of light radiation (e.g., the emitter may include a "Single Photon Avalanche Diode", SPAD).

Consequently, the ToF sensor allows the distances of bodies (for example a person) present in the field of view of the ToF sensor to be measured. The ToF sensor has a high precision in measuring the distance of the user from the sensor but also has high energy consumption (e.g., about 20 mA) and a very narrow field of view (e.g., with a detection angle of about 25°).

For these reasons, the ToF sensor is generally used for measuring distance, although the previously listed issues do not make its use optimal in several applications (e.g., low-power applications).

The need is therefore felt to detect the distance of the user from the electronic equipment (e.g., a PC) with high precision and without high energy consumptions, in order to automatically control the functionalities of the electronic equipment (for example for automatically turning the PC screen on and off on the basis of the user's presence).

Document EP 3 433 571 A1 relates to a distance determination that can utilize an electronic device including an infrared sensor to detect a thermal signature of a subject at a first location and a thermal signature of the subject at a second location, a distance sensor to determine a distance of the subject at the first location from the electronic device, and a controller to determine a physical size based on the determined distance and the thermal signature of the subject at the first location, and determine a distance of the subject at a second location based on the physical size and a thermal signature of the subject at the second location.

Document EP 2 959 459 A1 relates to three-dimensional imaging and, in particular, to a system and method for three-dimensional imaging utilising thermal infrared image data.

Document JP 2014 149761 A relates to an information processing apparatus having a sensor capable of detecting a person.

The aim of the present invention is to provide a measuring device, an electronic apparatus, a measuring method and a computer program product, which overcome the drawbacks of the prior art.

SUMMARY OF THE INVENTION

According to the present invention, a measuring device, an electronic apparatus, a measuring method and a computer program product are provided, as defined in the annexed claims.

BRIEF DESCRIPTION OF THE DRAWINGS

For a better understanding of the present invention, a preferred embodiment is now described, purely by way of non-limiting example, with reference to the attached drawings, wherein:

- Figure 1 is a schematic perspective view of an electronic apparatus which comprises a measuring device, according to one embodiment;
- Figure 2 is a schematic view showing the electronic apparatus of Figure 1 and further details regarding the measuring device, according to one embodiment;
- Figure 3 is a plot showing a calibration curve obtained through the measuring device, according to one embodiment; and
- Figure 4 is a block diagram showing a measuring method performed through the measuring device, according to one embodiment.

In particular, the Figures are shown with reference to a triaxial Cartesian system defined by an X axis, a Y axis and a Z axis, orthogonal to each other.

In the following description, elements common to the different embodiments have been indicated with the same reference numbers.

DETAILED DESCRIPTION OF THE INVENTION

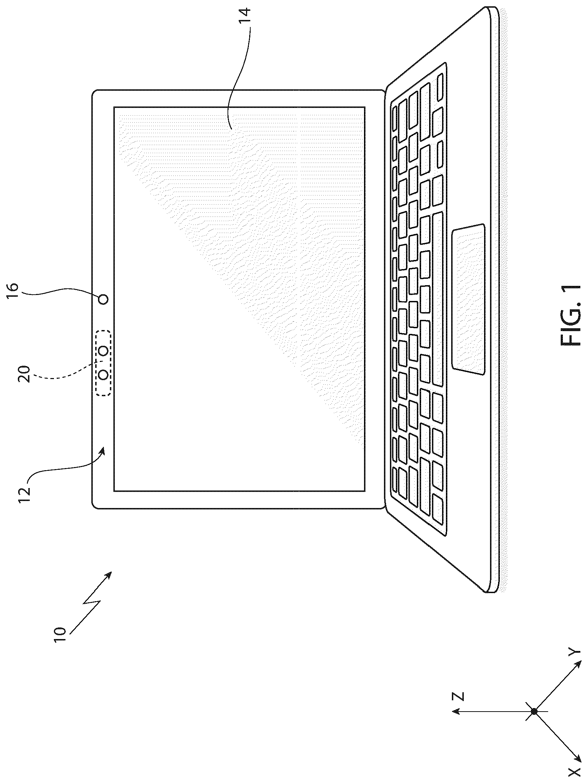

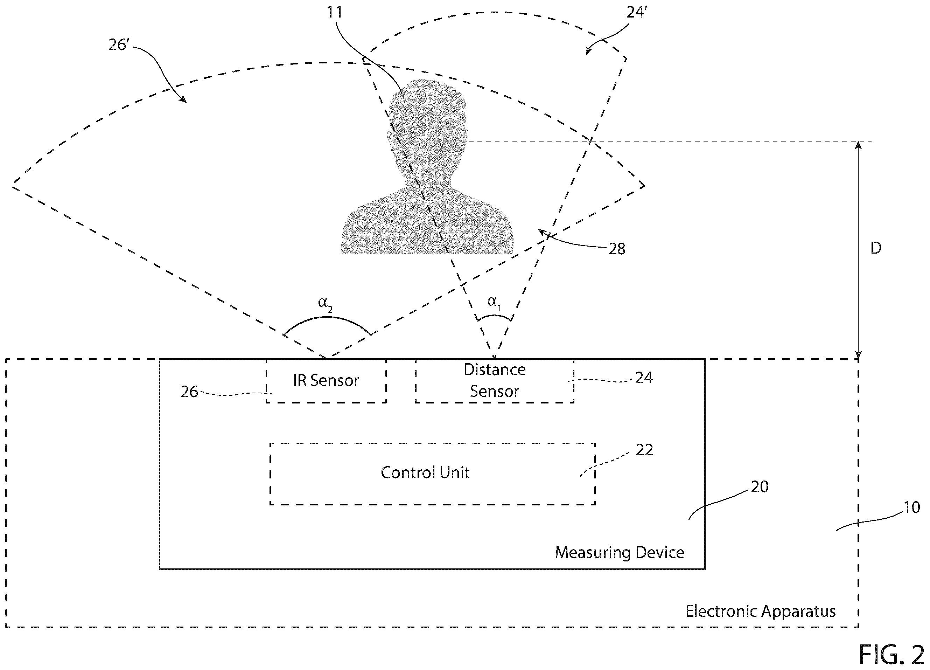

Figure 1 shows an electronic apparatus 10 usable by a user (shown in Figure 2 with the reference 11).

Figure 1 shows the illustrative and non-limiting case wherein the electronic apparatus 10 is a PC (therefore hereinafter also indicated with the reference 10). In the following, this exemplary case is considered, nonetheless other types of electronic apparatuses 10 may be similarly considered. For illustrative and non-limiting purposes, the electronic apparatus 10 may also be a soundbar, a smart appliance, an IoT apparatus, a tablet, etc.

The PC 10 comprises a measuring device 20 better described hereinbelow and configured to measure the distance of the user 11 from the PC 10.

In particular, the measuring device 20 extends at a main surface 12 of the PC 10 which the user 11 faces when the latter is present and is in a use position (or interest position, predefined position) of the PC 10.

In detail, the use position is the position, or more generally the set of positions, in which the user 11 may use the PC 10. For example, the use position is identified by the fact that the user 11 is placed in front of the PC 10 and is distant from PC 10 by a distance lower than a threshold distance. In greater detail, the distance (shown in Figure 2 with the reference D) between the user 11 and the measuring device 20 may be considered as the distance between the user 11 and the PC 10 and the threshold distance may be, for illustrative and non-limiting purposes, equal to about 80 cm.

For example, the PC 10 comprises a screen 14 which defines part of the main surface 12 and, as shown in Figure 1, the measuring device 20 may extend on the screen 14, for example laterally to a video camera 16 of the PC 10.

In this manner, when the user 11 is in the use position of the PC 10, the user 11 faces the measuring device 20 which may therefore measure the distance D present between it and the user 11.

With reference to Figure 2, the measuring device 20 is now described in more detail.

The measuring device 20 comprises a control unit 22, a distance sensor 24 and an infrared, IR, radiation sensor 26. Hereinafter, the IR radiation sensor 26 is also more simply called IR sensor 26.

According to an exemplary embodiment, the control unit 22 (such as a microprocessor, a microcontroller or a dedicated calculation unit) is an electronic control unit which may comprise, coupled to each other, a data storage unit (not shown, such as a memory, e.g. a non-volatile memory) for storing acquired data and a processing unit (not shown) for processing acquired data. In a manner not shown and known per se, the control unit may also comprise one or more of the following components: an electrical energy storage module (e.g., a battery), a power management module for managing the electrical energy, a digital front-end interface module with the distance sensor 24 and the IR sensor 26, a communication module (e.g., a radio communication module based on Bluetooth technology).

The distance sensor 24 and the IR sensor 26 are coupled (e.g., electrically coupled) to the control unit 22. For example, the distance sensor 24 and the IR sensor 26 are coupled to the control unit 22 through the digital front-end interface module of the control unit 22, of a per se known type.

For example, the distance sensor 24 and the IR sensor 26 may optionally be of micro electro-mechanical systems, MEMS, type. In other words, they may be made using known micromanufacturing techniques for processing semiconductor materials, such as for example silicon. Nonetheless, other technologies may be similarly considered.

The distance sensor 24 is a distance sensor of known type, configured to measure the distance D between the user 11 and the measuring device 20 when the user 11 is in a field of view 24' of the distance sensor 24.

In particular, the distance sensor 24 is a time of flight (ToF) sensor, for example an ultrasonic or optical ToF sensor.

Hereinafter, the case wherein the distance sensor 24 is an optical ToF sensor is exemplarily considered, however other types of ToF sensors (e.g., ultrasonic sensors) or distance sensors may be considered.

In use, the distance sensor 24 generates a distance signal $S_d$ which is received by the control unit 22 and is indicative, when the user 11 is in the field of view 24', of the distance D of the user 11 from the distance sensor 24 (i.e. from the measuring device 10).

The IR sensor 26 is an IR radiation sensor configured to detect the IR radiation emitted by an emitting body (i.e. a hot body and in particular the user 11) when the latter is in a field of view 26' of the IR sensor 26.

In particular, the IR sensor 26 is a "Thermal MOS", TMOS, sensor, of known type and which operates as a detector of the IR radiation emitted by the user 11.

In particular, the TMOS is a field effect transistor device of known type and typically used in sensor applications to determine the amount of radiation (in detail IR radiation) emitted by an emitting body, here the user 11. The emitting body is any hot body that emits IR radiation, such as a person or an animal. The radiation, emitted by the emitting body and received by the TMOS, causes the generation of charge carriers at the conductive channel of the TMOS and, therefore, a corresponding variation in the output current of the TMOS; the latter may be related to the extent of the radiation emitted by the object under examination, in such a way as to have a measure of the radiation emitted by the emitting body.

In general, the TMOS allows the presence or absence of the user 11 to be detected in its field of view 26'.

According to an embodiment exemplarily considered hereinbelow, the TMOS present in the measuring device 10 is the Infrared Temperature Sensor TMOS marketed by STMicroelectronics with the reference code STHS34PF80 (further details may be found at the address https://www.st.com/en/mems-and-sensors/infrared-ir-sensors.html).

In particular, the TMOS sensor (in detail STMicroelectronics' STHS34PF80) is capable of generating one temperature signal correlated to the presence or absence of the user 11 in the field of view 26'.

The temperature signal is a signal indicative of the temperature of the entities (living beings such as people or inanimate but hot objects such as heating apparatuses) present in the field of view 26' of the IR sensor 26.

Consequently, the temperature signal is determined as a function of both the IR radiation emitted by the user 11 present in the field of view 26' of the TMOS sensor, and the IR radiation which may normally be present in the environment wherein the TMOS sensor is placed even in the absence of living beings. In other words, the temperature signal has a baseline which depends on the amount of environmental IR radiation that the TMOS sensor measures in the absence of the user 11 in the field of view 26' (e.g., due to electromagnetic noise of the environment wherein the TMOS sensor is present, at the temperature of the air surrounding the TMOS sensor, etc.), and may vary with respect to this baseline when the TMOS sensor detects the IR radiation emitted by the user 11, which adds to the environmental IR radiation already present. Consequently, peaks of the temperature signal of the TMOS sensor with respect to its baseline are indicative of the presence of the user 11 in the field of view 26' of the IR sensor 26.

In particular, the TMOS sensor may be of temperature-compensated type, in a per se known manner.

In the embodiment here considered wherein the TMOS sensor is the STMicroelectronics' STHS34PF80, the temperature signal corresponds to the signal $T_{object}$ (or even $T_{obj}$) indicated in the datasheet of the TMOS sensor. For this reason, hereinafter the temperature signal is indicated with the reference $T_{object}$.

Therefore, in use, the IR sensor 26 generates the temperature signal $T_{object}$ which is received by the control unit 22 and is indicative, when the user 11 is in the field of view 26', of the intensity of the IR radiation emitted by the user 11 and detected by the IR sensor 26. Considering that the IR radiation detected by the IR sensor 26 is directly proportional to the intensity of the IR radiation emitted by the emitting body but is also inversely proportional to the distance between the IR sensor 26 and the emitting body, the temperature signal $T_{object}$ is correlated to the distance D of the user 11 from the IR sensor 26 (i.e. from the measuring device 10). Consequently, and as better described hereinbelow, the distance D may be measured starting from the temperature signal $T_{object}$.

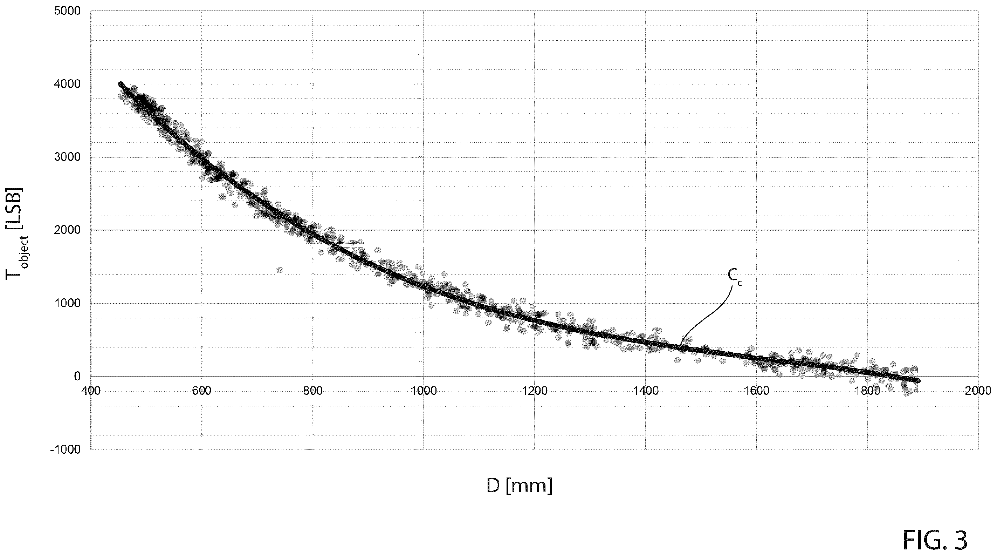

In particular, Figure 3 shows an example of the temperature signal $T_{object}$ as the distance of the user 11 from the measuring device 10 varies. The curve shown in Figure 3 is better described hereinbelow.

For example, in the present application the TMOS sensor may operate with an "output data rate" (ODR) equal to about 8 Hz.

As shown in Figure 2, the distance sensor 24 and the IR sensor 26 extend at the main surface 12 in such a way as to face the user 11 when the latter is in the use position of the PC 10.

For example, the distance sensor 24 and the IR sensor 26 are lateral to each other with respect to the main surface 12.

The fields of view 24' and 26' of the distance sensor 24 and the IR sensor 26 are superimposed on each other at the use position of the PC 10. In other words, the fields of view 24' and 26' have a superimposition region 28 which comprises the use position of the PC 10, so that the user 11 is detected by both the distance sensor 24 and the IR sensor 26 when he/she is in the use position of the PC 10.

For example, the field of view 24' of the distance sensor 24 has a detection angle (or opening angle) $\alpha_1$ equal to about 25° and the field of view 26' of the IR sensor 26 has a respective detection angle (or opening angle) $\alpha_2$ equal to about 80°.

Considering that the distance sensor 24 and the IR sensor 26 have a mutual distance (not shown) which is substantially negligible (e.g., which may be lower than a few cm), as a result the superimposition region 28 is almost equal in extension to the smaller of the fields of view 24' and 26' (here the field of view 24'). For this same reason, it may be considered that the distance between the user 11 and the distance sensor 24 and the distance between the user 11 and the IR sensor 26 are substantially equal to each other and that they define the distance D between the user 11 and the PC 10. It has been verified that this is especially true when a high mutual superimposition of the fields of view 24' and 26' is present, as previously described. However, it remains apparent that an exact value of the distance D between the user 11 and the PC 10 may be calculated starting from the distance between the user 11 and the distance sensor 24 and/or from the distance between the user 11 and the IR sensor 26, on the basis of the actual arrangement of the distance sensor 24 and/or the IR sensor 26 in the PC 10 and of known trigonometric techniques.

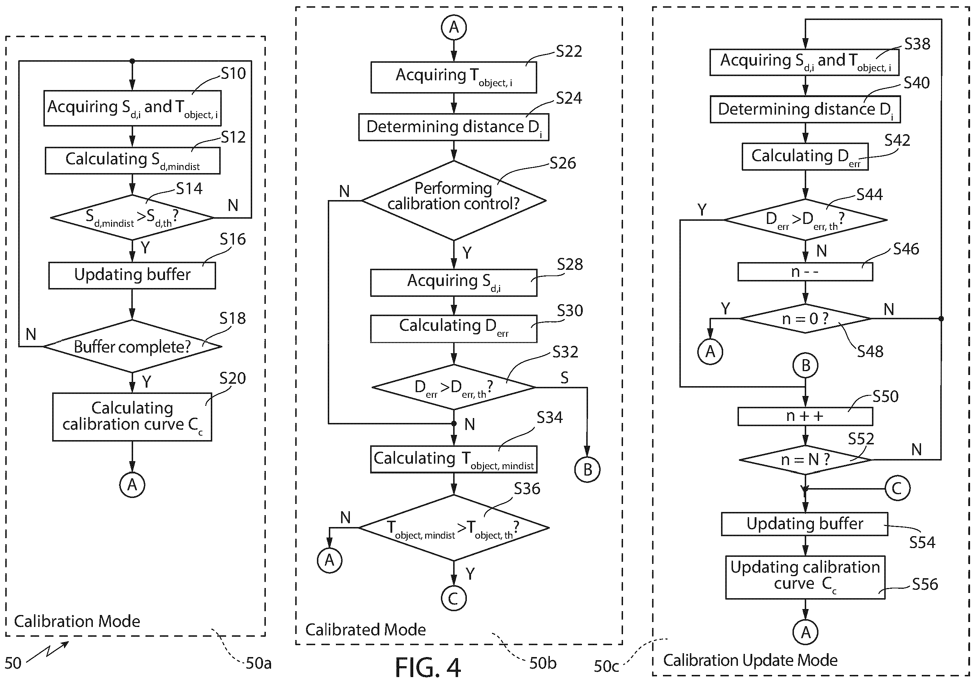

In use, the control unit 22 implements a measuring method 50 now described with reference to Figure 4.

In particular, in use, the control unit 22 determines the distance D between the user 11 and the measuring device 20 on the basis of the temperature signal $T_{object}$ acquired by the IR sensor 26.

The measuring method 50 identifies a calibration mode 50a, a calibrated mode 50b, and a calibration update mode 50c of the measuring device 20.

When the measuring device 20 is turned on or is provided with a measurement start signal, the measuring device 20 is initially operated in the calibration mode 50a in order to be calibrated. As better described below, during calibration the distance signal $S_d$ and the temperature signal $T_{object}$ are acquired and, on the basis of these signals, a calibration curve (in particular, an example is shown in Figure 3 with the reference $C_c$) is generated wherein the values of the temperature signal $T_{object}$ are associated with respective values of the distance D in such a way that the distance D may be determined on the basis of the temperature signal $T_{object}$. Consequently, in this mode both the distance sensor 24 and the IR sensor 26 are always active.

After the calibration mode 50a, the measuring device 20 is operated in the calibrated mode 50b. In the calibrated mode 50b, the temperature signal $T_{object}$ is acquired, and on the basis of this signal and the calibration curve $C_c$, the distance D is determined. Furthermore, in this mode it is periodically verified whether a calibration update condition is confirmed which implies the need for an update of the calibration previously performed in the calibration mode 50a. In particular and as better described hereinbelow, both the temperature signal $T_{object}$ and, periodically, the distance signal $S_d$ are acquired and, on the basis of these signals, the calibration update condition is verified. Consequently, in this mode the IR sensor 26 is always active and the distance sensor 24 is only periodically active.

When the calibration update condition is confirmed, the measuring device 20 is operated in the calibration update mode 50c. In the calibration update mode 50c, the measuring device 20 is calibrated again to obtain an updated calibration curve $C_c$, on the basis of the newly acquired values of the distance signal $S_d$ and the temperature signal $T_{object}$. In particular, the calibration of the measuring device 20 may be updated following variations in the environmental conditions of the place where the PC 10 is present (e.g., turning on an air conditioner or a heating system which modifies the temperature of the air surrounding the PC 10), which impact the measurements of the IR sensor 26 and/or the distance sensor 24, making them inaccurate and therefore requiring new calibration. Consequently, in this mode both the distance sensor 24 and the IR sensor 26 are always active.

Following the update of the calibration curve $C_c$, the measuring device 20 is operated again in the calibrated mode 50b, on the basis of the updated calibration curve $C_c$.

Figure 4 shows in detail an embodiment of the measuring method 50.

At a step S10 of the calibration mode 50a, the control unit 22 acquires the distance signal $S_d$ through the distance sensor 24 and the temperature signal $T_{object}$ through the IR sensor 26. In particular, at the time instant considered there are acquired respective values of the distance signal $S_d$ and of the temperature signal $T_{object}$, also indicated hereinafter respectively as $S_{d,i}$ and $T_{object,i}$ where i is the index corresponding to the time instant considered. In other words, this pair of values correspond to measurements performed simultaneously. These values $S_{d,i}$ and $T_{object,i}$ are respectively indicative of the distance D of the user 11 from the measuring device 20 measured by the distance sensor 24, and of the IR radiation emitted by the user 11 and detected by the IR sensor 26. For example, these values $S_{d,i}$ and $T_{object,i}$ may be electrical quantities (e.g., electric voltage or electric current values) indicative of the distance D measured by the distance sensor 24 and of the IR radiation emitted by the user 11 and detected by the IR sensor 26, or they may correspond respectively to the information of the distance D measured by the distance sensor 24 and of the IR radiation emitted by the user 11 and detected by the IR sensor 26.

At a step S12 of the calibration mode 50a (consecutive to step S10), the control unit 22 calculates a minimum distance signal difference $S_{d,mindist}$ on the basis of the measured value $S_{d,i}$ of the distance signal $S_d$ and stored values $S_{buffer,k}$ of the distance signal $S_d$ which have been stored, in particular in a buffer (e.g., present in the data storage unit of the control unit 22).

As better described hereinbelow, the buffer is configured to store a number K (e.g., about 20) of pairs of values $S_{d,i}$ and $T_{object,i}$, i.e. K values $T_{object,i}$ and K corresponding values $S_{d,i}$ each indicative of a respective value $D_i$ of distance D of the user 11 from the measuring device 20.

The minimum distance signal difference $S_{d,mindist}$ is defined as the minimum difference between the differences (in absolute value) calculated between the measured value $S_{d,i}$ acquired at the instant i considered and each of the stored values $S_{buffer,k}$ present in the buffer. In particular, the minimum distance signal difference $S_{d,mindist}$ is a distance value that may be obtained by converting into distance the minimum difference value (e.g., electrical quantity) calculated starting from the stored values $S_{buffer,k}$ and the measured value $S_{d,i}$ (e.g., electrical quantities) or which may be obtained by converting into distances the stored values $S_{buffer,k}$ and the measured value $S_{d,i}$ (e.g., electrical quantities) and then calculating the minimum difference thereof. In other words, the minimum distance signal difference $S_{d,mindist}$ is calculated according to the following mathematical expression:

$$S_{d,mindist} = \min\left(\left|S_{d,i} - S_{buffer,k}\right|\right), \text{ with } k = 1, \ldots, K$$

Consequently, the minimum distance signal difference $S_{d,mindist}$ is indicative of the proximity of the measured value $S_{d,i}$ to the stored values $S_{buffer,k}$.

At a step S14 of the calibration mode 50a (consecutive to step S12), the control unit 22 verifies whether the minimum distance signal difference $S_{d,mindist}$ calculated for the value $S_{d,i}$ is greater than a minimum threshold difference $S_{d,th}$ (for example, a distance equal to about 30 mm).

If the minimum distance signal difference $S_{d,mindist}$ is not greater than the minimum threshold difference $S_{d,th}$, the measuring method 50 returns to step S10 and the pair of values $S_{d,i}$ and $T_{object,i}$ is not stored in the buffer because it is too close and similar to a pair of values already stored in the buffer, **i.e.** it refers to a value $D_i$ of distance D which is too close to the values of the distance D having the respective pairs of values already stored in the buffer corresponding thereto.

If the minimum distance signal difference $S_{d,mindist}$ is greater than the minimum threshold difference $S_{d,th}$, the method proceeds to a step S16 of the calibration mode 50a (consecutive to step S14) wherein the buffer is updated by storing the new pair of measured values $S_{d,i}$ and $T_{object,i}$ therein, since this pair of values is sufficiently distant and therefore different from the pairs of values already stored in the buffer, i.e. it refers to a value $D_i$ of distance D which is sufficiently distant from the values of the distance D having the respective pairs of values already stored in the buffer corresponding thereto.

At the first iteration of the measuring method 50 wherein the buffer is empty, the first pair of measured values $S_{d,i}$ and $T_{object,i}$ is stored in the buffer. At subsequent iterations the new pairs of measured values $S_{d,i}$ and $T_{object,i}$ are stored in the buffer only if they meet the condition of step S14.

At a step S18 of the calibration mode 50a (consecutive to step S16), the control unit 22 verifies whether the buffer is complete, i.e. whether it is full and therefore whether K pairs of values $S_{d,i}$ and $T_{object,i}$ are stored therein.

If the buffer is not complete, the measuring method 50 returns to step S10 so as to be able to continue to fill the buffer.

If the buffer is complete, the method proceeds to a step S20 of the calibration mode 50a (consecutive to step S18) wherein the calibration curve $C_c$ previously described and shown in Figure 3 is calculated.

In particular, starting from the values of the distance signal $S_d$ which have been stored in the buffer (also indicated hereinafter with the reference $S_{buffer,k}$ with k=1, ...,K) respective values $D_{buffer,k}$ of the distance D are determined, in a per se known manner (e.g., through known transfer functions). Alternatively, in case the values $S_{buffer,k}$ of the distance signal $S_d$ which have been stored in the buffer are already distance information, this intermediate step may be omitted since the distance information is already available (in this case, $S_{buffer,k} = D_{buffer,k}$).

Thanks to the data stored in the buffer, each value $D_{buffer,k}$ calculated starting from the respective value $S_{buffer,k}$ is coupled to a respective value of the temperature signal $T_{object}$ stored in the buffer (also indicated hereinafter with the reference $T_{buffer,k}$ with k=1,...,K). In this manner, a set of pairs of values $D_{buffer,k}$ and $T_{buffer,k}$ associated with each other is defined.

As shown in Figure 3, each of these pairs of values $D_{buffer,k}$ and $T_{buffer,k}$ may be graphically represented as a respective point in a two-dimensional plot which has the distance D measured through the distance sensor 24 on the abscissa axis and the temperature signal $T_{object}$ measured by the IR sensor 26 on the ordinate axis.

The control unit 22 then determines the calibration curve $C_c$ by interpolating the points of this set, i.e. by interpolating the pairs of values $D_{buffer,k}$ and $T_{buffer,k}$. This allows a function, in particular a biunivocal function, between the distance D measured through the distance sensor 24 and the temperature signal $T_{object}$ measured through the IR sensor 26 to be obtained. Consequently, the calibration curve $C_c$ associates each value of the distance D measured through the distance sensor 24 with a respective value of the temperature signal $T_{object}$ measured by the IR sensor 26, and vice versa.

This interpolation may be carried out on the basis of several known mathematical functions. For example, the interpolating function may be an exponential function, a first-degree polynomial function, a second-degree polynomial function or a third-degree polynomial function. Nonetheless, other known interpolating functions may be used. In particular, it has been verified that the second- and third-degree polynomial functions are those that allow achieving the best interpolation accuracy among the interpolating functions mentioned herein.

The interpolating function may be chosen in the design step of the measuring device 20 and therefore may be predefined and fixed, or it may be chosen in real time and adaptively from among multiple predefined interpolating functions depending on the set of the pairs of values $D_{buffer,k}$ and $T_{buffer,k}$. In this second case, among the interpolating functions previously described the one that best interpolates the values $D_{buffer,k}$ and $T_{buffer,k}$ of the stored set may be selected. The selection of the curve with optimized interpolation occurs in a per se known manner.

The calibration mode 50a therefore ends with the calculation of the calibration curve $C_c$ at step S20. At this point, in fact, the measuring device 20 is calibrated, since the means are available to accurately measure the distance D starting from the temperature signal $T_{object}$ acquired by the IR sensor 26.

After step S20, the measuring method 50 proceeds with the calibrated mode 50b of the measuring device 20.

In particular, at a step S22 of the calibrated mode 50b (consecutive to step S20) the control unit 22 acquires a new value $T_{object,i}$ of the temperature signal $T_{object}$ through the IR sensor 26. This new value $T_{object,i}$ is correlated, as previously described, to the new value $D_i$ of distance D of the user 11 from the measuring device 20. Consequently, at step S22 the distance sensor 24 is inactive, **i.e.** it is not performing any measurement.

At a step S24 of the calibrated mode 50b (consecutive to step S22), the control unit 22 determines the new value $D_i$ of distance D on the basis of the new value $T_{object,i}$ of the temperature signal $T_{object}$ and the calibration curve $C_c$. In particular, the new value $D_i$ is the value of distance D which, in the calibration curve $C_c$, corresponds to the new measured value $T_{object,\ i}$ of the temperature signal $T_{object}$.

After determining the new distance D on the basis of the measurement carried out by the IR sensor 26, the measuring method 50 proceeds to a step S26 of the calibrated mode 50b (consecutive to step S24), wherein the control unit 22 verifies whether performing a calibration control (also called periodic calibration control) is needed to verify the reliability of the calibration curve $C_c$ previously calculated.

The calibration control is performed periodically, i.e. whenever a calibration control interval has elapsed since the last calibration control performed. For example, the calibration control interval may be equal to about 5 seconds.

Consequently, at step S26 it is verified whether the calibration control interval has elapsed since the last time it was checked whether performing a calibration control is needed.

If the calibration control interval has not elapsed, the measuring method 50 proceeds to a step S34 of the calibrated mode 50b, better described hereinbelow.

Conversely, if the calibration control interval has elapsed, the measuring method 50 proceeds to a step S28 of the calibrated mode 50b (consecutive to step S26) wherein the control unit 22 acquires a new value $S_{d,i}$ of the distance signal $S_d$ through the distance sensor 24. Consequently, at step S28 the distance sensor 24 is active.

At a step S30 of the calibrated mode 50b (consecutive to step S28), the control unit 22 calculates a distance signal error $D_{err}$.

The distance signal error $D_{err}$ is calculated on the basis of the values of distance D obtained starting from the new measured values $T_{object,i}$ and $S_{d,i}$ of the temperature signal $T_{object}$ and the distance signal $S_d$ (i.e. the values obtained at the latest execution of steps S22 and S28).

In particular, to calculate the distance signal error $D_{err}$, an estimated value $D_{object,i}$ of the distance D is determined as a function of the calibration curve $C_c$ and the measured value $T_{object,i}$ of the temperature signal $T_{object}$ acquired at step S22 (similarly to what is done at step S24). Furthermore, a value $D_{d,i}$ of the distance D is determined as a function of the value $S_{d,i}$ of the distance signal $S_d$ acquired at step S28 (similarly to what is done at step S10).

Since the distance sensor 24 has a measurement accuracy of the distance D greater than the IR sensor 26, it is assumed here that the value $D_{d,i}$ coincides with the actual distance D at the instant of the iteration considered, i.e. that it is one correct and realistic measurement thereof. Consequently, the correct or anomalous operating state of the IR sensor 26 is determined as regards the measurement carried out by the distance sensor 24, in such a way that the anomalous operation corresponds to a substantial relative offset of the distance measurements obtained from the IR sensor 26 (through the application of the calibration curve $C_c$) and from the distance sensor 24.

The distance signal error $D_{err}$ is therefore defined as the difference, in absolute value, between the estimated value (or estimated distance value) $D_{object,i}$ obtained through the IR sensor 26 and the value (or measured distance value) $D_{d,i}$ obtained through the distance sensor 24. In other words, the distance signal error $D_{err}$ is calculated according to the following mathematical expression:

$$D_{err}= \left| D_{object,i}-D_{d,i} \right|$$

Consequently, the distance signal error $D_{err}$ is indicative of the difference between the measurements of the distance D operated by the IR sensor 26 and the distance sensor 24, where the measurement of the distance sensor 24 is used as a reference for the measurement of the actual distance D.

At a step S32 of the calibrated mode 50b (consecutive to step S30), the control unit 22 verifies a first unreliability condition of the calibration curve $C_c$ used to calculate the value $D_{object,i}$. The first unreliability condition corresponds to an anomaly in the calibration detected through a verification on the data of the distance sensor 24 (for simplicity it is therefore also called anomaly of the distance sensor 24).

In particular, it is checked whether the distance signal error $D_{err}$ is greater than a distance signal threshold error $D_{err,th}$ (e.g., equal to about 200 mm). When this condition is verified, the calibration curve $C_c$ used to calculate the value $D_{object,i}$ is potentially unreliable and therefore going to the calibration update mode 50c is needed for further checks and, if after these checks the need thereof is detected, for updating the calibration curve $C_c$.

Consequently, if the first unreliability condition of the calibration curve $C_c$ is confirmed and therefore the calibration curve $C_c$ is potentially unreliable, the measuring method 50 proceeds to a step S50 of the calibration update mode 50c, better discussed hereinbelow.

Conversely, if the first unreliability condition of the calibration curve $C_c$ is not confirmed, the measuring method 50 proceeds to a step S34 of the calibrated mode 50b (consecutive both to step S32 through its output "N" and to step S26 through its output "N").

At step S34, the control unit 22 calculates a minimum temperature signal difference $T_{object,mindist}$.

The minimum temperature signal difference $T_{object,mindist}$ is calculated on the basis of the measured value $T_{object,i}$ of the temperature signal $T_{object}$, previously acquired at the latest execution of step S22, and the stored values $T_{buffer,k}$ of the temperature signal $T_{object}$ which have been stored in the buffer. In particular, the minimum temperature signal difference $T_{object,mindist}$ is defined as the minimum difference between the differences (in absolute value) calculated between the measured value $T_{object,i}$ acquired at step S22 and each of the stored values $T_{buffer,k}$ present in the buffer. In other words, the minimum temperature signal difference $T_{object,mindist}$ is calculated according to the following mathematical expression:

$$T_{object,mindist}=\min\left( \left| T_{object,i}-T_{buffer,k} \right| \right),\ \ \text{with}\ \ k=1,\dots,K$$

Consequently, the minimum temperature signal difference $T_{object,mindist}$ is indicative of the proximity of the measured value $T_{object,i}$ to the stored values $T_{buffer,k}$.

At a step S36 of the calibrated mode 50b (consecutive to step S34), the control unit 22 verifies a second unreliability condition of the calibration curve $C_c$ used to calculate the value $D_{object,i}$. The second unreliability condition corresponds to an anomaly in the calibration detected through a verification on the data of the IR sensor 26 (for simplicity it is therefore also called anomaly of the IR sensor 26). In detail, the detection of the second unreliability condition is based on a check of the proximity of the measured value $T_{object,i}$ to the stored values $T_{buffer,k}$, as the calibration curve $C_c$ might not be accurate for the calculation of the value $D_{object,i}$ in case the temperature datum $T_{object,i}$ was too distant from the data $T_{buffer,k}$ previously used for the calculation of the calibration curve $C_c$.

In particular, at step S36 it is checked whether the minimum temperature signal difference $T_{object,mindist}$ is greater than a minimum temperature signal threshold difference $T_{object,th}$ (e.g., equal to about 250 LSB). When this condition is verified, the measurement $T_{object,i}$ of the IR sensor 26 is too distant from the data $T_{buffer,k}$ previously used for the calculation of the calibration curve $C_c$ and therefore going to the calibration update mode 50c is needed for updating the calibration curve $C_c$.

Consequently, if the second unreliability condition is verified and therefore the measured value $T_{object,i}$ is too distant from the data $T_{buffer,k}$ previously used for the calculation of the calibration curve $C_c$, the measuring method 50 proceeds to a step S54 of the calibration update mode 50c, better discussed hereinbelow.

Conversely, if the second unreliability condition is not verified and therefore the measured value $T_{object,i}$ is sufficiently close to the data $T_{buffer,k}$ previously used for the calculation of the calibration curve $C_c$, the measuring method 50 returns to step S22.

In general, the conditions checked at steps S32 and S36 define the calibration update condition previously described, which is needed to understand whether the measurement of the distance D performed at step S24 is reliable or whether, instead, it is not and therefore going to the calibration update mode 50c is needed for a possible calibration update.

At a step S38 of the calibration update mode 50c, the control unit 22 acquires new values $S_{d,i}$ and $T_{object,i}$ of the distance signal $S_d$ and the temperature signal $T_{object}$ through the distance sensor 24 and the IR sensor 26, similarly to what has been described in step S10.

At a step S40 of the calibration update mode 50c (consecutive to step S38), the control unit 22 determines the new value $D_i$ of distance D. For example, this may be done on the basis of the measurement made by the IR sensor 26 at step S38, similarly to what has been described in step S24. Nonetheless and as better described below, this determination may also be made in a different manner, for example on the basis of the value $S_{d,i}$ of the distance signal $S_d$ acquired at step S38.

At a step S42 of the calibration update mode 50c (consecutive to step S40), the control unit 22 calculates again the distance signal error $D_{err}$ on the basis of the new values $S_{d,i}$ and $T_{object,i}$ acquired at step S38, similarly to what has been described in step S30.

At a step S44 of the calibration update mode 50c (consecutive to step S42), the control unit 22 verifies again, in a manner similar to what has been described in step S32, the anomaly condition of the distance sensor 24 (i.e. the first unreliability condition) on the basis of the distance signal error $D_{err}$ calculated at step S42. In particular, it is checked whether the distance signal error $D_{err}$ is greater than the distance signal threshold error $D_{err,th}$.

If the anomaly condition of the distance sensor 24 of step S44 is not confirmed, the measuring method 50 proceeds to a step S46 of the calibration update mode 50c (consecutive to step S44).

At step S46, the control unit 22 updates the value of a count index n by reducing its value by one unit.

In particular, the count index n is initialized to an initial value (e.g., 0) every time that the method goes from calibrated mode 50b to calibration update mode 50c. The count index n is updated during the calibration update mode 50c and may vary between a predefined minimum value (e.g., the initial value) and a predefined maximum value (or predefined number) N (e.g., 15).

At a step S48 of the calibration update mode 50c (consecutive to step S46), the control unit 22 verifies whether a first update condition (or minimum update condition) is confirmed.

In particular, the first update condition is confirmed if the count index n assumes the predefined minimum value (e.g., 0).

If the first update condition is confirmed, the measuring method 50 returns to step S22 of the calibrated mode 50b since the detected anomaly of the distance sensor 24 did not last sufficiently to be indicative of a real lack of reliability of the calibration curve $C_c$ such as to require a new calibration (i.e. it has not been detected for N time instants).

Conversely, if the first update condition is not confirmed, the measuring method 50 returns to step S38.

Conversely, if the anomaly condition of the distance sensor 24 of step S44 is confirmed, the measuring method 50 proceeds to step S50 of the calibration update mode 50c (which is therefore consecutive both to step S44 through the output "S" and to step S32 through the output "S").

At step S50, the control unit 22 updates the value of the count index n by increasing its value by one unit.

In particular, since in case of confirmation of the anomaly condition of the distance sensor 24 at step S32 the method goes directly to step S50 (i.e. this step is the first that is performed when entering the calibration update mode 50c), the count index n is increased by one unit immediately after being initialized to the initial value. This avoids the possibility that, at step S46, the count index n is updated to a value lower than the initial value and therefore that count errors arise.

At a step S52 of the calibration update mode 50c (consecutive to step S50), the control unit 22 verifies whether a second update condition (or maximum update condition) is confirmed.

In particular, the second update condition is confirmed if the count index n assumes the predefined maximum value N (e.g., 15), i.e. if the anomaly lasted sufficiently to be indicative of a real lack of reliability of the calibration curve $C_c$ such as to require a new calibration (i.e. if it has been detected for N time instants).

If the second update condition is not confirmed, the measuring method 50 returns to step S38.

Conversely, if the second update condition is confirmed, the measuring method 50 proceeds to step S54 of the calibration update mode 50c (consecutive both to step S52 through the output "S" and to step S36 through the output "S").

In other words, steps S38-S52 allow verifying whether the anomaly condition of the distance sensor 24 is confirmed for the predefined number N of time instants successive to each other (not necessarily consecutive to each other), therefore whether it lasted sufficiently to be indicative of a real lack of reliability of the calibration curve $C_c$ such as to require a new calibration.

At step S54, the control unit 22 updates the buffer by storing therein a new pair of measured values $S_{d,i}$ and $T_{object,i}$, as a replacement for the least recent pair of values (i.e. the oldest pair of values stored in the buffer).

This new stored pair may be, in the case of an anomaly of the distance sensor 24, the last acquired pair and thus the pair of values $S_{d,i}$ and $T_{object,i}$ acquired at the latest execution of step S38. Alternatively, in the case of an anomaly of the IR sensor 26, the new stored pair may be a new pair of values $S_{d,i}$ and $T_{object,i}$ which are acquired at this step. In other words, in this second case step S54 may comprise the acquisition of a new pair of values $S_{d,i}$ and $T_{object,i}$, similarly to what has been previously described in steps S10 and S38, and the subsequent storage of this new pair of values in the buffer.

At a step S56 of the calibration update mode 50c (consecutive to step S54), the control unit 22 updates the calibration curve $C_c$ on the basis of the buffer that has been updated at step S54. This occurs in a manner completely similar to what has been previously described in step S20.

After step S56, the measuring method 50 returns to step S22 as the measurement device 20 is calibrated again.

Furthermore, and in a manner not shown in Figure 4, the measuring device 20 may generate an output signal indicative of the value of the distance D. The output signal may be received by the PC 10 (or by external apparatuses operatively coupled to the measuring device 20) and may be used to control one or more functionalities of the PC 10 (or of the external apparatuses). For example, the screen of the PC 10 may be automatically activated or deactivated as a function of the distance D measured between the user 11 and the PC 10.

In particular, the output signal may be equal at any instant to the value $D_{object,i}$ calculated at the last step performed between steps S24 and S40 (therefore still using the IR sensor 26). Alternatively, the output signal may be equal to the value $D_{object,i}$ calculated at the last step performed between steps S24 and S40 when the distance sensor 24 is not active, and instead be equal to the value $D_{d,i}$ obtained at the last step performed between steps S30 and S42 when the distance sensor 24 is active: in this case, the output signal is generally equal to the measurement obtained using the IR sensor 26, except for when the measurement of the distance sensor 24 (which still has higher accuracy) is available.

The measuring method 50 previously described may be implemented by the control unit 22 through a corresponding computer program product.

From an examination of the characteristics of the invention made according to the present invention, the advantages that it affords are evident.

The measuring device 20 and the measuring method 50 allow the distance D between the user 11 and the measuring device 20 to be measured with high accuracy and low electrical consumption.

In fact, the measurement of the distance D is performed through the IR sensor 26 (which has low energy consumption), while the distance sensor 24 (with accurate measurement but high energy costs) is used only to calibrate the measurement of the IR sensor 26, to periodically verify whether there are anomalies in the measurements carried out and, if necessary, to recalibrate the measurement of the IR sensor 26.

In particular, since the calibration curve $C_c$ provides an association between the measurements of the IR sensor 26 and the measurements of the distance sensor 24, the distance D on the basis of the IR sensor 26 with measurement accuracy substantially comparable to the known case wherein the distance sensor 24 is used to perform this measurement may be measured. Furthermore, since the measurement is performed with the IR sensor 26, the electrical consumption is substantially reduced with respect to the known case wherein the distance sensor 24 is used (e.g., up to about 1000 times).

Furthermore, the calibration update mode 50c ensures that, in case the value measured by the IR 26 sensor differs too much from the values previously stored in the buffer and used for the calculation of the calibration curve $C_c$, the calibration is updated so as to bring the measurement of the measuring device 20 back to the desired levels of accuracy.

Furthermore, in case of detection at step S32 of a potential unreliability of the calibration curve $C_c$, the calibration update is performed if the anomaly is confirmed for N samples successive to each other, so that any isolated and transient anomalous results do not cause an unnecessary update of the calibration. This allows the energy consumption of the measuring device 20 to be further reduced.

Furthermore, it has been verified that the measurement of the measuring device 20 allows the presence of the user 11 to be discriminated with respect to other bodies such as inanimate objects present in the fields of view 24' and 26'. In this manner, the measurement performed is selective to the user 11.

Finally, it is clear that modifications and variations may be made to the invention described and illustrated herein without thereby departing from the scope of the present invention, as defined in the attached claims. For example, the different embodiments described may be combined with each other to provide further solutions.

Furthermore, the periodic check and the consequent updating of the calibration curve $C_c$ described in steps S26-S56 may be omitted, to further reduce the energy consumption of the measuring device 20.

Furthermore, although the case in which the value $S_{d,i}$ of the distance signal $S_d$ is indicative of a respective value $D_{d,i}$ of the distance D and therefore the steps S30 and S42 comprise the determination of the value $D_{d,i}$ starting from the value $S_{d,i}$ has previously been described, it is however apparent that the value $S_{d,i}$ may already directly correspond to the value of the distance D and therefore the determination of the value $D_{d,i}$ may be omitted. In other words, in this case the distance sensor 24 directly generates at output the information on the distance D, which is used for the calculation of the distance signal error $D_{err}$ in a manner similar to what has been previously described.

Furthermore, when entering the calibration update mode 50c following the detection at step S32 of the anomaly condition of the distance sensor 24, the count index n may also be initialized to a value greater than the predefined minimum value (in particular, a value equal to one unit more than the predefined minimum value and therefore here exemplarily 1) and proceed directly to step S38. In other words, through this different initialization carrying out steps S50 and S52 before going to step S38 is not needed and therefore the method may proceed directly with the actions of step S38. This further simplifies the measuring method 50.

**Claims**

1.  A measuring device (20) for measuring a distance (D) between the measuring device (20) and a user (11), the measuring device (20) comprising:

    a distance sensor (24), configured to measure the distance (D) when the user (11) is in a field of view (24') of the distance sensor (24), and to generate a distance signal ($S_d$) indicative of the distance (D),
    an infrared, IR, radiation sensor (26), configured to detect the IR radiation emitted by the user (11) when the user (11) is in a respective field of view (26') of the IR radiation sensor (26), and to generate a temperature signal ($T_{object}$) indicative of the IR radiation detected and correlated to the distance (D) of the user (11), the field of view (24') of the distance sensor (24) and the field of view (26') of the IR radiation sensor (26) being at least partially superimposed on each other, and
    a control unit (22), coupled to the distance sensor (24) and the IR radiation sensor (26) and configured to:

    - in a calibration mode (50a) of the measuring device (20), acquire the distance signal ($S_d$) and the temperature signal ($T_{object}$) respectively through the distance sensor (24) and the IR radiation sensor (26),

    the measuring device (20) being **characterized in that** the control unit (22) is further configured to:

    - in the calibration mode (50a) of the measuring device (20) and on the basis of the distance signal ($S_d$) and the temperature signal ($T_{object}$), generate a calibration curve ($C_c$) which associates to each other values of the temperature signal ($T_{object}$) with respective values of the distance (D); and
    - in a calibrated mode (50b) of the measuring device (20), acquire the temperature signal ($T_{object}$) through the IR radiation sensor (26) and, on the basis of the temperature signal ($T_{object}$) and the calibration curve ($C_c$), determine the distance (D).

2.  The measuring device (20) according to claim 1, wherein the control unit (22) is further configured to:

    - in the calibrated mode (50b) of the measuring device (20), periodically acquire the distance signal ($S_d$) through the distance sensor (24) and, on the basis of the distance signal ($S_d$) and the temperature signal ($T_{object}$) acquired in the calibrated mode (50b), verify a calibration update condition; and
    - if the calibration update condition is confirmed, in a calibration update mode (50c) of the measuring device (20) update the calibration curve ($C_c$) on the basis of the distance signal ($S_d$) and the temperature signal ($T_{object}$).

3.  The measuring device (20) according to claim 1 or 2, wherein the IR radiation sensor (26) is a "Thermal MOS", TMOS, and
    wherein the distance sensor (24) is a time-of-flight sensor.

4.  An electronic apparatus (10) usable by a user (11) and comprising a measuring device (20) according to any of claims 1-3.

5.  The electronic apparatus (10) according to claim 4, wherein the field of view (24') of the distance sensor (24) and the field of view (26') of the IR radiation sensor (26) are at least partially superimposed on each other at a use position of the user (11) wherein the electronic apparatus (10) is usable by the user (11).

6.  The electronic apparatus (10) according to claim 4 or 5, wherein the electronic apparatus (10) is configured to control a functionality of the electronic apparatus (10) as a function of the distance (D) measured by the measuring device (20).

7.  A measuring method (50) for measuring a distance (D) between a measuring device (20) and a user (11), the measuring device (20) comprising:

    a distance sensor (24) to measure the distance (D) when the user (11) is in a field of view (24') of the distance sensor (24), and to generate a distance signal ($S_d$) indicative of the distance (D),
    an infrared, IR, radiation sensor (26) to detect the IR radiation emitted by the user (11) when the user (11) is in a respective field of view (26') of the IR radiation sensor (26), and to generate a temperature signal ($T_{object}$) indicative of the IR radiation detected and correlated to the distance (D) of the user (11), the field of view (24') of the distance sensor (24) and the field of view (26') of the IR radiation sensor (26) being at least partially superimposed on each other, and

a control unit (22) coupled to the distance sensor (24) and the IR radiation sensor (26),
the measuring method (50) being performed by the control unit (22) and comprising the step of:

- in a calibration mode (50a) of the measuring device (20), acquiring (S10) the distance signal ($S_d$) and the temperature signal ($T_{object}$) respectively through the distance sensor (24) and the IR radiation sensor (26),

the measuring method (50) being **characterized in that** it also comprises the steps of:

- in the calibration mode (50a) of the measuring device (20) and on the basis of the distance signal ($S_d$) and the temperature signal ($T_{object}$), generating (S12-S20) a calibration curve ($C_c$) which associates to each other values of the temperature signal ($T_{object}$) with respective values of the distance (D); and
- in a calibrated mode (50b) of the measuring device (20) :

  acquiring (S22) the temperature signal ($T_{object}$) through the IR radiation sensor (26), and
  on the basis of the temperature signal ($T_{object}$) and the calibration curve ($C_c$), determining (S24) the distance (D).

8. The measuring method (50) according to claim 7, wherein the step of generating (S12-S20) the calibration curve ($C_c$) comprises, for each pair of values ($S_{d,i}$, $T_{object,i}$) of the distance signal ($S_d$) and the temperature signal ($T_{object}$) which are acquired at a time instant considered:

   - calculating (S12) a respective minimum distance signal difference ($S_{d,mindist}$) indicative of a minimum difference between a plurality of differences calculated in absolute value between the value ($S_{d,i}$) of the distance signal ($S_d$) and a respective plurality of stored values ($S_{buffer,k}$) of the distance signal ($S_d$), which are stored in a buffer;
   - verifying (S14) whether the respective minimum distance signal difference ($S_{d,mindist}$) is greater than a minimum threshold difference ($S_{e,th}$),
   - if the minimum distance signal difference ($S_{d,mindist}$) is greater than the minimum threshold difference ($S_{d,th}$), updating (S16) the buffer by storing the pair of values ($S_{d,i}$, $T_{object,i}$) of the distance signal ($S_d$) and the temperature signal ($T_{object}$);
   - verifying (S18) whether a predefined number (K) of pairs of values ($S_{d,i}$, $T_{object,i}$) of the distance signal ($S_d$) and the temperature signal ($T_{object}$) are stored in the buffer; and
   - if the predefined number (K) of pairs of values ($S_{d,i}$, $T_{object,i}$) of the distance signal ($S_d$) and the temperature signal ($T_{object}$) are stored in the buffer, calculating (S20) the calibration curve ($C_c$) through interpolation performed on the basis of the pairs of values ($S_{d,i}$, $T_{object,i}$) of the distance signal ($S_d$) and the temperature signal ($T_{object}$) stored in the buffer.

9. The measuring method (50) according to claim 8, wherein the step of calculating (S20) the calibration curve ($C_c$) comprises selecting, on the basis of the pairs of values ($S_{d,i}$, $T_{object,i}$) of the distance signal ($S_d$) and the temperature signal ($T_{object}$) stored in the buffer, an interpolating function among a plurality of predefined interpolating functions to perform the interpolation.

10. The measuring method (50) according to any of claims 7-9, further comprising the steps of:

    - in the calibrated mode (50b) of the measuring device (20) :

      periodically acquiring (S26, S28) the distance signal ($S_d$) through the distance sensor (24), and
      on the basis of the distance signal ($S_d$) and the temperature signal ($T_{object}$) acquired in the calibrated mode (50b), verifying (S30-S36) a calibration update condition; and

    - if the calibration update condition is confirmed, in a calibration update mode (50c) of the measuring device (20): updating (S54-S56) the calibration curve ($C_c$) on the basis of the distance signal ($S_d$) and the temperature signal ($T_{object}$).

11. The measuring method (50) according to claim 10, wherein the step of periodically acquiring (S26, S28) the distance signal ($S_d$) comprises:

    - verifying (S26) whether a calibration control interval has elapsed since the last verification of the calibration update condition; and

- acquiring (S28) the distance signal ($S_d$) if said calibration control interval has elapsed.

12. The measuring method (50) according to claim 8 and claim 11, wherein the step of verifying (S30-S36) the calibration update condition comprises:

- if said calibration control interval has elapsed, verifying (S30, S32) an anomaly condition of the distance sensor (24) on the basis of the distance signal ($S_d$) and the temperature signal ($T_{object}$) acquired in the calibrated mode (50b);
- if said calibration control interval has not elapsed or if the anomaly condition of the distance sensor (24) is not confirmed, verifying (S34, S36) an anomaly condition of the IR radiation sensor (26) on the basis of the temperature signal ($T_{object}$) acquired in the calibrated mode (50b),

wherein, if the anomaly condition of the distance sensor (24) has been confirmed, the measuring method (50) further comprises, in the calibration update mode (50c) of the measuring device (20), verifying (S38-S52) whether the anomaly condition of the distance sensor (24) is confirmed for a predefined number (N) of time instants successive to each other, and

wherein the step of updating (S54-S56) the calibration curve ($C_c$) is performed if the anomaly condition of the distance sensor (24) is confirmed for the predefined number (N) of time instants successive to each other or if the anomaly condition of the IR radiation sensor (26) is confirmed.

13. The measuring method (50) according to claim 12, wherein the step of verifying (S30, S32) the anomaly condition of the distance sensor (24) comprises:

- calculating (S30), on the basis of the values ($S_{d,i}$, $T_{object,i}$) of the distance signal ($S_d$) and the temperature signal ($T_{object}$) acquired in the calibrated mode (50b), a distance signal error ($D_{err}$) indicative of a difference in absolute value between an estimated distance value ($D_{object,i}$), determined starting from the value ($T_{object,i}$) of the temperature signal ($T_{object}$), and a measured distance value ($D_{d,i}$) correlated to the value ($S_{d,i}$) of the distance signal ($S_d$); and
- verifying (S32) whether the distance signal error ($D_{err}$) is greater than a distance signal threshold error ($D_{err,th}$),

wherein the step of verifying (S34, S36) the anomaly condition of the IR radiation sensor (26) comprises:

- calculating (S34), on the basis of the value ($T_{object,i}$) of the temperature signal ($T_{object}$) acquired in the calibrated mode (50b), a minimum temperature signal difference ($T_{object,mindist}$) indicative of a minimum difference between a plurality of differences calculated in absolute value between the value ($T_{object,i}$) of the temperature signal ($T_{object}$) and a respective plurality of stored values ($T_{buffer,k}$) of the temperature signal ($T_{object}$), which are stored in the buffer; and
- verifying (S36) whether the minimum temperature signal difference ($T_{object,mindist}$) is greater than a minimum temperature signal threshold difference ($T_{object,th}$),

wherein the step of verifying (S38-S52) whether the anomaly condition of the distance sensor (24) is confirmed for the predefined number (N) of time instants comprises:

a. acquiring (S38) new values ($S_{d,i}$, $T_{object,i}$) of the distance signal ($S_d$) and the temperature signal ($T_{object}$) respectively through the distance sensor (24) and the IR radiation sensor (26), determining (S40) the distance (D) again on the basis of the new value ($T_{object,i}$) of the temperature signal ($T_{object}$) and the calibration curve ($C_c$), calculating (S42) the distance signal error ($D_{err}$) again on the basis of the new values ($S_{d,i}$, $T_{object,i}$) of the distance signal ($S_d$) and the temperature signal ($T_{object}$);
b. verifying (S44) whether the new distance signal error ($D_{err}$) is greater than the distance signal threshold error ($D_{err,th}$);
c. if the new distance signal error ($D_{err}$) is not greater than the distance signal threshold error ($D_{err,th}$), updating (S46) a count index (n) by reducing its value and verifying (S48) whether the count index (n) assumes a predefined minimum value;
d. if the count index (n) does not assume the predefined minimum value, repeating steps a-d;
e. if the new distance signal error ($D_{err}$) is greater than the distance signal threshold error ($D_{err,th}$), updating (S50) the count index (n) by increasing its value and verifying (S52) whether the count index (n) assumes a predefined maximum value correlated to the predefined number (N);
f. if the count index (n) does not assume the predefined maximum value, repeating steps a-f, and

wherein the step of updating (S54-S56) the calibration curve (C$_c$) is performed if the count index (n) assumes the predefined maximum value.

14. The measuring method (50) according to claim 8 and any of claims 10-13, wherein the step of updating (S54-S56) the calibration curve (C$_c$) comprises:

- storing (S54) in the buffer a new pair of values (S$_{d,i}$, T$_{object,i}$) of the distance signal (S$_d$) and the temperature signal (T$_{object}$) as a replacement for the oldest pair of values (S$_{d,i}$, T$_{object,i}$) present in the buffer; and
- recalculating (S56) the calibration curve (C$_c$) through interpolation performed on the basis of the pairs of values (S$_{d,i}$, T$_{object,i}$) of the distance signal (S$_d$) and the temperature signal (T$_{object}$) stored in the updated buffer.

15. A computer program product storable in a control unit (22) of a measuring device (20),
the computer program being designed such that, when executed, the control unit (22) becomes configured to implement a measuring method (50) according to any of claims 7-14.

**Patentansprüche**

1. Messvorrichtung (20) zum Messen eines Abstands (D) zwischen der Messvorrichtung (20) und einem Benutzer (11), wobei die Messvorrichtung (20) Folgendes umfasst:

einen Abstandssensor (24), der so konfiguriert ist, dass er den Abstand (D) misst, wenn der Benutzer (11) sich in einem Sichtfeld (24') des Abstandssensors (24) befindet, und ein Abstandssignal (S$_d$) erzeugt, das den Abstand (D) anzeigt,
einen Infrarot, IR,-Strahlungssensor (26), der so konfiguriert ist, dass er die von dem Benutzer (11) emittierte IR-Strahlung detektiert, wenn der Benutzer (11) sich in einem jeweiligen Sichtfeld (26') des IR-Strahlungssensors (26) befindet, und ein Temperatursignal (T$_{object}$) erzeugt, das die detektierte IR-Strahlung anzeigt und mit dem Abstand (D) des Benutzers (11) korreliert ist, wobei das Sichtfeld (24') des Abstandssensors (24) und das Sichtfeld (26') des IR-Strahlungssensors (26) sich mindestens teilweise überlagern, und
eine Steuereinheit (22), die mit dem Abstandssensor (24) und dem IR-Strahlungssensor (26) gekoppelt und für Folgendes konfiguriert ist:

- in einem Kalibrierungsmodus (50a) der Messvorrichtung (20), Erfassen des Abstandssignals (S$_d$) und des Temperatursignals (T$_{object}$) jeweils über den Abstandssensor (24) und den IR-Strahlungssensor (26),

wobei die Messvorrichtung (20) **dadurch gekennzeichnet ist, dass** die Steuereinheit (22) ferner für Folgendes konfiguriert ist:

- in dem Kalibrierungsmodus (50a) der Messvorrichtung (20) und basierend auf dem Abstandssignal (S$_d$) und dem Temperatursignal (T$_{object}$), Erzeugen einer Kalibrierungskurve (C$_c$), die die Werte des Temperatursignals (T$_{object}$) mit den jeweiligen Werten des Abstands (D) verknüpft; und
- in einem kalibrierten Modus (50b) der Messvorrichtung (20), Erfassen des Temperatursignals (T$_{object}$) über den IR-Strahlungssensor (26), und Bestimmen des Abstands (D) basierend auf dem Temperatursignal (T$_{object}$) und der Kalibrierungskurve (C$_c$).

2. Messvorrichtung (20) nach Anspruch 1, wobei die Steuereinheit (22) ferner für Folgendes konfiguriert ist:

- in dem kalibrierten Modus (50b) der Messvorrichtung (20), periodisches Erfassen des Abstandssignals (S$_d$) über den Abstandssensor (24), und Überprüfen eines Kalibrierungsaktualisierungszustands basierend auf dem Abstandssignal (S$_d$) und dem Temperatursignal (T$_{object}$), die in dem kalibrierten Modus (50b) erfasst wurden; und
- wenn der Kalibrierungsaktualisierungszustand bestätigt ist, Aktualisieren der Kalibrierungskurve (C$_c$) basierend auf dem Abstandssignal (S$_d$) und dem Temperatursignal (T$_{object}$) in einem Kalibrierungsaktualisierungsmodus (50c) der Messvorrichtung (20).

3. Messvorrichtung (20) nach Anspruch 1 oder 2, wobei der IR-Strahlungssensor (26) ein "Thermisches MOS", TMOS, ist und
wobei der Abstandssensor (24) ein Flugzeitsensor ist.

4. Elektronische Einrichtung (10), die von einem Benutzer (11) verwendet werden kann und eine Messvorrichtung (20) nach einem der Ansprüche 1-3 umfasst.

5. Elektronische Einrichtung (10) nach Anspruch 4, wobei das Sichtfeld (24') des Abstandssensors (24) und das Sichtfeld (26') des IR-Strahlungssensors (26) sich an einer Verwendungsposition des Benutzers (11) mindestens teilweise überlagern, wobei die elektronische Vorrichtung (10) von dem Benutzer (11) verwendet werden kann.

6. Elektronische Einrichtung (10) nach Anspruch 4 oder 5, wobei die elektronische Einrichtung (10) so konfiguriert ist, dass es eine Funktionalität der elektronischen Einrichtung (10) als Funktion des von der Messvorrichtung (20) gemessenen Abstands (D) steuert.

7. Messverfahren (50) zum Messen eines Abstands (D) zwischen einer Messvorrichtung (20) und einem Benutzer (11), wobei die Messvorrichtung (20) Folgendes umfasst:

einen Abstandssensor (24), um den Abstand (D) zu messen, wenn der Benutzer (11) sich in einem Sichtfeld (24') des Abstandssensors (24) befindet, und ein Abstandssignal ($S_d$) erzeugt, das den Abstand (D) anzeigt, einen Infrarot, IR,-Strahlungssensor (26), um die von dem Benutzer (11) emittierte IR-Strahlung zu detektieren, wenn der Benutzer (11) sich in einem jeweiligen Sichtfeld (26') des IR-Strahlungssensors (26) befindet, und ein Temperatursignal ($T_{object}$) erzeugt, das die detektierte IR-Strahlung anzeigt und mit dem Abstand (D) des Benutzers (11) korreliert ist, wobei das Sichtfeld (24') des Abstandssensors (24) und das Sichtfeld (26') des IR-Strahlungssensors (26) sich mindestens teilweise überlagern, und eine Steuereinheit (22), die mit dem Abstandssensor (24) und dem IR-Strahlungssensor (26) gekoppelt ist, wobei das Messverfahren (50) von der Steuereinheit (22) durchgeführt wird und den folgenden Schritt umfasst:

- in einem Kalibrierungsmodus (50a) der Messvorrichtung (20), Erfassen (S10) des Abstandssignals ($S_d$) und des Temperatursignals ($T_{object}$) jeweils über den Abstandssensor (24) und den IR-Strahlungssensor (26),

wobei das Messverfahren (50) **dadurch gekennzeichnet ist, dass** es auch die folgenden Schritte umfasst:

- in dem Kalibrierungsmodus (50a) der Messvorrichtung (20) und basierend auf dem Abstandssignal ($S_d$) und dem Temperatursignal ($T_{object}$), Erzeugen (S12-S20) einer Kalibrierungskurve ($C_c$), die die Werte des Temperatursignals ($T_{object}$) mit den jeweiligen Werten des Abstands (D) verknüpft; und
- in einem kalibrierten Modus (50b) der Messvorrichtung (20):

Erfassen (S22) des Temperatursignals ($T_{object}$) über den IR-Strahlungssensor (26), und Bestimmen (S24) des Abstands (D) basierend auf dem Temperatursignal ($T_{object}$) und der Kalibrierungskurve ($C_c$).

8. Messverfahren (50) nach Anspruch 7, wobei der Schritt des Erzeugens (S12-S20) der Kalibrierungskurve ($C_c$) für jedes Wertepaar ($S_{d,i}$, $T_{object,i}$) des Abstandssignals ($S_d$) und des Temperatursignals ($T_{object}$), die zu einem betrachteten Zeitpunkt erfasst werden, Folgendes umfasst:

- Berechnen (S12) eines jeweiligen minimalen Abstandssignalunterschieds ($S_{d,mindist}$), der einen minimalen Unterschied zwischen einer Vielzahl von Unterschieden angibt, die in dem Absolutwert zwischen dem Wert ($S_{d,i}$) des Abstandssignals ($S_d$) und einer jeweiligen Vielzahl von gespeicherten Werten ($S_{buffer,k}$) des Abstandssignals ($S_d$) berechnet werden, die in einem Puffer gespeichert sind;
- Überprüfen (S14), ob der jeweilige minimale Abstandssignalunterschied ($S_{d,mindist}$) größer ist als ein minimaler Schwellenwertunterschied ($S_{d,th}$);
- wenn der minimale Abstandssignalunterschied ($S_{d,mindist}$) größer ist als der minimale Schwellenwertunterschied ($S_{d,th}$), Aktualisieren (S16) des Puffers, indem das Wertepaar ($S_{d,i}$, $T_{object,i}$) des Abstandssignals ($S_d$) und des Temperatursignals ($T_{object}$) gespeichert wird;
- Überprüfen (S18), ob eine vordefinierte Anzahl (K) von Wertepaaren ($S_{d,i}$, $T_{object,i}$) des Abstandssignals ($S_d$) und des Temperatursignals ($T_{object}$) in dem Puffer gespeichert ist; und
- wenn die vordefinierte Anzahl (K) von Wertepaaren ($S_{d,i}$, $T_{object,i}$) des Abstandssignals ($S_d$) und des Temperatursignals ($T_{object}$) in dem Puffer gespeichert ist, Berechnen (S20) der Kalibrierungskurve ($C_c$) durch Interpolation, die basierend auf den in dem Puffer gespeicherten Wertepaaren ($S_{d,i}$, $T_{object,i}$) des Abstandssignals ($S_d$) und des Temperatursignals ($T_{object}$) durchgeführt wird.

9. Messverfahren (50) nach Anspruch 8, wobei der Schritt des Berechnens (S20) der Kalibrierungskurve ($C_c$) das Auswählen einer Interpolationsfunktion aus einer Vielzahl vordefinierter Interpolationsfunktionen, um die Interpolation durchzuführen, basierend auf den Wertepaaren ($S_{d,i}$, $T_{object,i}$) des Abstandssignals ($S_d$) und des Temperatursignals ($T_{object}$), die in dem Puffer gespeichert sind, umfasst.

10. Messverfahren (50) nach einem der Ansprüche 7-9, das ferner die folgenden Schritte umfasst:

    - in dem kalibrierten Modus (50b) der Messvorrichtung (20):

        periodisches Erfassen (S26, S28) des Abstandssignals ($S_d$) über den Abstandssensor (24), und Überprüfen (S30-S36) eines Kalibrierungsaktualisierungszustands basierend auf dem Abstandssignal ($S_d$) und dem Temperatursignal ($T_{object}$), die in dem kalibrierten Modus (50b) erfasst wurden; und

    - wenn der Kalibrierungsaktualisierungszustand bestätigt ist, in einem Kalibrierungsaktualisierungsmodus (50c) der Messvorrichtung (20):
    Aktualisieren (S54-S56) der Kalibrierungskurve ($C_c$) basierend auf dem Abstandssignal ($S_d$) und dem Temperatursignal ($T_{object}$).

11. Messverfahren (50) nach Anspruch 10, wobei der Schritt des periodischen Erfassens (S26, S28) des Abstandssignals ($S_d$) Folgendes umfasst:

    - Überprüfen (S26), ob seit der letzten Überprüfung des Kalibrierungsaktualisierungszustands ein Kalibrierungssteuerintervall abgelaufen ist; und
    - Erfassen (S28) des Abstandssignals ($S_d$), wenn das Kalibrierungssteuerintervall abgelaufen ist.

12. Messverfahren (50) nach Anspruch 8 und Anspruch 11, wobei der Schritt des Überprüfens (S30-S36) des Kalibrierungsaktualisierungszustands Folgendes umfasst:

    - wenn das Kalibrierungssteuerintervall abgelaufen ist, Überprüfen (S30, S32) eines Anomaliezustands des Abstandssensors (24) basierend auf dem Abstandssignal ($S_d$) und dem Temperatursignal ($T_{object}$), die in dem kalibrierten Modus (50b) erfasst wurden;
    - wenn das Kalibrierungssteuerintervall nicht abgelaufen ist oder wenn der Anomaliezustand des Abstandssensors (24) nicht bestätigt ist, Überprüfen (S34, S36) eines Anomaliezustands des IR-Strahlungssensors (26) basierend auf dem in dem kalibrierten Modus (50b) erfassten Temperatursignal ($T_{object}$),

        wobei, wenn der Anomaliezustand des Abstandssensors (24) bestätigt wurde, das Messverfahren (50) ferner in dem Kalibrierungsaktualisierungsmodus (50c) der Messvorrichtung (20) das Überprüfen (S38-S52), ob der Anomaliezustand des Abstandssensors (24) für eine vordefinierte Anzahl (N) von aufeinanderfolgenden Zeitpunkten bestätigt wird, umfasst, und
        wobei der Schritt des Aktualisierens (S54-S56) der Kalibrierungskurve ($C_c$) durchgeführt wird, wenn der Anomaliezustand des Abstandssensors (24) für die vordefinierte Anzahl (N) von aufeinanderfolgenden Zeitpunkten bestätigt wird oder wenn der Anomaliezustand des IR-Strahlungssensors (26) bestätigt wird.

13. Messverfahren (50) nach Anspruch 12, wobei der Schritt des Überprüfens (S30, S32) des Anomaliezustands des Abstandssensors (24) Folgendes umfasst:

    - Berechnen (S30), basierend auf den Werten ($S_{d,i}$, $T_{object,i}$) des Abstandssignals ($S_d$) und des Temperatursignals ($T_{object}$), Erfassen, in dem kalibrierten Modus (50b), eines Abstandssignalfehlers ($D_{err}$), der einen Unterschied in dem Absolutwert zwischen einem geschätzten Abstandswert ($D_{object,i}$), der aus dem Wert ($T_{object,i}$) des Temperatursignals ($T_{object}$) bestimmt wird, und einem gemessenen Abstandswert ($D_{d,i}$) angibt, der mit dem Wert ($S_{d,i}$) des Abstandssignals ($S_d$) korreliert ist; und
    - Überprüfen (S32), ob der Abstandssignalfehler ($D_{err}$) größer ist als der Abstandssignal-Schwellenwertfehler ($D_{err,th}$),
    wobei der Schritt des Überprüfens (S34, S36) des Anomaliezustands des IR-Strahlungssensors (26) Folgendes umfasst:

        - Berechnen (S34), basierend auf dem Wert ($T_{object,i}$) des Temperatursignals ($T_{object}$), das in dem kalibrierten Modus (50b) erfasst wurde, eines minimalen Temperatursignalunterschieds ($T_{object,mindist}$), der einen minimalen Unterschied zwischen einer Vielzahl von Unterschieden angibt, die in dem Absolutwert zwischen dem Wert ($T_{object,i}$) des Temperatursignals ($T_{object}$) und einer jeweiligen Vielzahl von gespeicherten Werten ($T_{buffer,k}$) des Temperatursignals ($T_{object}$) berechnet werden, die in dem Puffer gespeichert sind; und
- Überprüfen (S36), ob der minimale Temperatursignalunterschied ($T_{object,mindist}$) größer ist als der minimale Temperatursignal-Schwellenwertunterschied ($T_{object,th}$),

wobei der Schritt des Überprüfens (S38-S52), ob der Anomaliezustand des Abstandssensors (24) für die vordefinierte Anzahl (N) von Zeitpunkten bestätigt wird, Folgendes umfasst:

a. Erfassen (S38) neuer Werte ($S_{d,i}$, $T_{object,i}$ des Abstandssignals ($S_d$) und des Temperatursignals ($T_{object}$) jeweils über den Abstandssensor (24) und den IR-Strahlungssensor (26), erneutes Bestimmen (S40) des Abstands (D) basierend auf dem neuen Wert ($T_{object,i}$) des Temperatursignals ($T_{object}$) und der Kalibrierungskurve ($C_c$), erneutes Berechnen (S42) des Abstandssignalfehlers ($D_{err}$) basierend auf den neuen Werten ($S_{d,i}$, $T_{object,i}$) des Abstandssignals ($S_d$) und des Temperatursignals ($T_{object}$);
b. Überprüfen (S44), ob der neue Abstandssignalfehler ($D_{err}$) größer ist als der Abstandssignal-Schwellenwertfehler ($D_{err,th}$);
c. wenn der neue Abstandssignalfehler ($D_{err}$) nicht größer ist als der Abstandssignal-Schwellenwertfehler ($D_{err,th}$), Aktualisieren (S46) eines Zählindex (n), indem sein Wert verringert wird, und Überprüfen (S48), ob der Zählindex (n) einen vordefinierten Minimalwert annimmt;
d. wenn der Zählindex (n) nicht den vordefinierten Minimalwert annimmt, Wiederholen der Schritte a-d;
e. wenn der neue Abstandssignalfehler ($D_{err}$) größer ist als der Abstandssignal-Schwellenwertfehler ($D_{err,th}$), Aktualisieren (S50) des Zählerindex (n), indem sein Wert erhöht wird, und Überprüfen (S52), ob der Zählerindex (n) einen vordefinierten Maximalwert annimmt, der mit der vordefinierten Anzahl (N) korreliert;
f. wenn der Zählindex (n) nicht den vordefinierten Maximalwert annimmt, Wiederholen der Schritte a-f, und wobei der Schritt des Aktualisierens (S54-S56) der Kalibrierungskurve ($C_c$) durchgeführt wird, wenn der Zählindex (n) den vordefinierten Maximalwert annimmt.

14. Messverfahren (50) nach Anspruch 8 und einem der Ansprüche 10-13, wobei der Schritt des Aktualisierens (S54-S56) der Kalibrierungskurve ($C_c$) Folgendes umfasst:

- Speichern (S54) in dem Puffer eines neuen Wertepaares ($S_{d,i}$, $T_{object,i}$) des Abstandssignals ($S_d$) und des Temperatursignals ($T_{object}$) als Ersatz für das älteste Wertepaar ($S_{d,i}$, $T_{object,i}$), das in dem Puffer vorhanden ist; und
- Neuberechnen (S56) der Kalibrierungskurve ($C_c$) durch Interpolation, die basierend auf den in dem aktualisierten Puffer gespeicherten Wertepaaren ($S_{d,i}$, $T_{object,i}$) des Abstandssignals ($S_d$) und des Temperatursignals ($T_{object}$) durchgeführt wird.

15. Computerprogrammprodukt, das in einer Steuereinheit (22) einer Messvorrichtung (20) speicherbar ist, wobei das Computerprogramm so ausgebildet ist, dass die Steuereinheit (22) bei Ausführung so konfiguriert wird, dass sie ein Messverfahren (50) nach einem der Ansprüche 7-14 implementiert.

## Revendications

1. Dispositif de mesure (20) pour mesurer une distance (D) entre le dispositif de mesure (20) et un utilisateur (11), le dispositif de mesure (20) comprenant :

un capteur de distance (24), configuré pour mesurer la distance (D) quand l'utilisateur (11) est dans un champ de vision (24') du capteur de distance (24), et pour générer un signal de distance ($S_d$) indicatif de la distance (D), un capteur de rayonnement infrarouge, IR (26), configuré pour détecter le rayonnement IR émis par l'utilisateur (11) quand l'utilisateur (11) est dans un champ de vision (26') respectif du capteur de rayonnement IR (26), et pour générer un signal de température ($T_{object}$) indicatif du rayonnement IR détecté et corrélé à la distance (D) de l'utilisateur (11), le champ de vision (24') du capteur de distance (24) et le champ de vision (26') du capteur de rayonnement IR (26) étant au moins en partie superposés l'un sur l'autre, et une unité de commande (22), couplée au capteur de distance (24) et au capteur de rayonnement IR (26) et configurée pour :

dans un mode d'étalonnage (50a) du dispositif de mesure (20), acquérir le signal de distance ($S_d$) et le signal de température ($T_{object}$) respectivement par le capteur de distance (24) et le capteur de rayonnement IR (26), le dispositif de mesure (20) étant **caractérisé en ce que** l'unité de commande (22) est en outre configurée pour :

dans le mode d'étalonnage (50a) du dispositif de mesure (20) et en se basant sur le signal de distance ($S_d$) et le signal de température ($T_{object}$), générer une courbe d'étalonnage ($C_c$) qui associe entre elles des valeurs du signal de température ($T_{object}$) et des valeurs respectives de la distance (D) ; et
dans un mode étalonné (50b) du dispositif de mesure (20), acquérir le signal de température ($T_{object}$) par le capteur de rayonnement IR (26) et, en se basant sur le signal de température ($T_{object}$) et la courbe d'étalonnage ($C_c$), déterminer la distance (D).

2.  Dispositif de mesure (20) selon la revendication 1, dans lequel l'unité de commande (22) est en outre configurée pour :

dans le mode étalonné (50b) du dispositif de mesure (20), acquérir périodiquement le signal de distance ($S_d$) par le capteur de distance (24) et, en se basant sur le signal de distance ($S_d$) et le signal de température ($T_{object}$) acquis dans le mode étalonné (50b), vérifier une condition de mise à jour d'étalonnage ; et
si la condition de mise à jour d'étalonnage est confirmée, dans un mode mise à jour d'étalonnage (50c) du dispositif de mesure (20) mettre à jour la courbe d'étalonnage ($C_c$) en se basant sur le signal de distance ($S_d$) et le signal de température ($T_{object}$).

3.  Dispositif de mesure (20) selon la revendication 1 ou 2, dans lequel le capteur de rayonnement IR (26) est un "MOS thermique", TMOS, et
dans lequel le capteur de distance (24) est un capteur de temps de propagation.

4.  Appareil électronique (10) utilisable par un utilisateur (11) et comprenant un dispositif de mesure (20) selon l'une quelconque des revendications 1-3.

5.  Appareil électronique (10) selon la revendication 4, dans lequel le champ de vision (24') du capteur de distance (24) et le champ de vision (26') du capteur de rayonnement IR (26) sont au moins en partie superposés l'un sur l'autre en une position d'utilisation de l'utilisateur (11) dans lequel l'appareil électronique (10) peut être utilisé par l'utilisateur (11).

6.  Appareil électronique (10) selon la revendication 4 ou 5, dans lequel l'appareil électronique (10) est configuré pour commander une fonctionnalité de l'appareil électronique (10) comme une fonction de la distance (D) mesurée par le dispositif de mesure (20).

7.  Procédé de mesure (50) pour mesurer une distance (D) entre un dispositif de mesure (20) et un utilisateur (11), le dispositif de mesure (20) comprenant :

un capteur de distance (24) pour mesurer la distance (D) quand l'utilisateur (11) est dans un champ de vision (24') du capteur de distance (24), et pour générer un signal de distance ($S_d$) indicatif de la distance (D),
un capteur de rayonnement infrarouge, IR (26) pour détecter le rayonnement IR émis par l'utilisateur (11) quand l'utilisateur (11) est dans un champ de vision (26') respectif du capteur de rayonnement IR (26), et pour générer un signal de température ($T_{object}$) indicatif du rayonnement IR détecté et corrélé à la distance (D) de l'utilisateur (11), le champ de vision (24') du capteur de distance (24) et le champ de vision (26') du capteur de rayonnement IR (26) étant au moins en partie superposés l'un sur l'autre, et
une unité de commande (22) couplée au capteur de distance (24) et au capteur de rayonnement IR (26), le procédé de mesure (50) étant réalisé par l'unité de commande (22) et comprenant l'étape de :

dans un mode d'étalonnage (50a) du dispositif de mesure (20), acquérir (S10) le signal de distance ($S_d$) et le signal de température ($T_{object}$) respectivement par le capteur de distance (24) et le capteur de rayonnement IR (26),
le procédé de mesure (50) étant **caractérisé en ce qu'**il comprend aussi les étapes de :

dans le mode d'étalonnage (50a) du dispositif de mesure (20) et en se basant sur le signal de distance ($S_d$) et le signal de température ($T_{object}$), générer (S12-S20) une courbe d'étalonnage ($C_c$) qui associe entre elles d'autres valeurs du signal de température ($T_{object}$) et des valeurs respectives de la distance (D) ; et
dans un mode étalonné (50b) du dispositif de mesure (20) :

acquérir (S22) le signal de température ($T_{object}$) par le capteur de rayonnement IR (26) et, en se basant sur le signal de température ($T_{object}$) et la courbe d'étalonnage ($C_c$), déterminer (S24) la distance (D).

**8.** Procédé de mesure (50) selon la revendication 7, dans lequel l'étape de générer (S12-S20) la courbe d'étalonnage ($C_c$) comprend, pour chaque paire de valeurs ($S_{d,i}$, $T_{object,i}$) du signal de distance ($S_d$) et du signal de température ($T_{object}$) qui sont acquises à un instant de temps considéré ;

de calculer (S12) une différence de signal de distance minimum respective ($S_{d,mindist}$) indicative d'une différence minimum entre une pluralité de différences calculées en valeur absolue entre la valeur ($S_{d,i}$) du signal de distance ($S_d$) et une pluralité respective de valeurs stockées ($S_{buffer,k}$) du signal de distance ($S_d$), qui sont stockées dans une mémoire tampon ;
de vérifier (S14) si la différence de signal de distance minimum respective ($S_{d,mindist}$) est supérieure à un seuil de différence minimum (Sd,th) ;
si la différence de signal de distance minimum respective ($S_{d,mindist}$) est supérieure au seuil de différence minimum ($S_{d,th}$), de mettre à jour (S16) la mémoire tampon en stockant la paire de valeurs ($S_{d,i}$, $T_{object,i}$) du signal de distance ($S_d$) et du signal de température ($T_{object}$) ;
de vérifier (S18) si un nombre prédéfini (K) de paires de valeurs ($S_{d,i}$, $T_{object,i}$) du signal de distance ($S_d$) et du signal de température ($T_{object}$) sont stockées dans la mémoire tampon ; et
si le nombre prédéfini (K) de paires de valeurs ($S_{d,i}$, $T_{object,i}$) du signal de distance ($S_d$) et du signal de température ($T_{object}$) sont stockées dans la mémoire tampon, de calculer (S20) la courbe d'étalonnage ($C_c$) par interpolation réalisée en se basant sur les paires de valeurs ($S_{d,i}$, $T_{object,i}$) du signal de distance ($S_d$) et du signal de température ($T_{object}$) stockées dans la mémoire tampon.

**9.** Procédé de mesure (50) selon la revendication 8, dans lequel l'étape de calculer (S20) la courbe d'étalonnage ($C_c$) comprend de sélectionner, en se basant sur les paires de valeurs ($S_{d,i}$, $T_{object,i}$) du signal de distance ($S_d$) et du signal de température ($T_{object}$) stockées dans la mémoire tampon, une fonction d'interpolation parmi une pluralité de fonctions d'interpolation prédéfinies pour réaliser l'interpolation.

**10.** Procédé de mesure (50) selon l'une quelconque des revendications 7-9, comprenant en outre les étapes de :

dans le mode étalonné (50b) du dispositif de mesure (20) ;
acquérir périodiquement (S26, S28) le signal de distance ($S_d$) par le capteur de distance (24), et
en se basant sur le signal de distance ($S_d$) et le signal de température ($T_{object}$) acquis dans le mode étalonné (50b), vérifier (S30-S36) une condition de mise à jour d'étalonnage ; et
si la condition de mise à jour d'étalonnage est confirmée, dans un mode mise à jour d'étalonnage (50c) du dispositif de mesure (20) ;
mettre à jour (S54-S56) la courbe d'étalonnage ($C_c$) en se basant sur le signal de distance ($S_d$) et le signal de température ($T_{object}$).

**11.** Procédé de mesure (50) selon la revendication 10, dans lequel l'étape d'acquérir périodiquement (S26, S28) le signal de distance ($S_d$) comprend :

de vérifier (S26) si un intervalle de contrôle d'étalonnage s'est écoulé depuis la dernière vérification de la condition de mise à jour d'étalonnage ; et
d'acquérir (S28) le signal de distance ($S_d$) si ledit intervalle de contrôle d'étalonnage s'est écoulé.

**12.** Procédé de mesure (50) selon la revendication 8 et la revendication 11, dans lequel l'étape de vérifier (S30-S36) la condition de mise à jour d'étalonnage comprend :

si ledit intervalle de contrôle d'étalonnage s'est écoulé, vérifier (S30, S32) une condition d'anomalie du capteur de distance (24) en se basant sur le signal de distance ($S_d$) et le signal de température ($T_{object}$) acquis dans le mode étalonné (50b) ;
si ledit intervalle de contrôle d'étalonnage ne s'est pas écoulé ou si la condition d'anomalie du capteur de distance (24) n'est pas confirmée, vérifier (S34, S36) une condition d'anomalie du capteur de rayonnement IR (26) en se basant sur le signal de température ($T_{object}$) acquis dans le mode étalonné (50b),
dans lequel, si la condition d'anomalie du capteur de distance (24) a été confirmée, le procédé de mesure (50) comprend en outre, dans le mode mise à jour d'étalonnage (50c) du dispositif de mesure (20), de vérifier (S38-S52) si la condition d'anomalie du capteur de distance (24) est confirmée pour un nombre prédéfini (N) d'instants de temps se succédant, et

dans lequel l'étape de mettre à jour (S54-S56) la courbe d'étalonnage ($C_c$) est réalisée si la condition d'anomalie du capteur de distance (24) est confirmée pour le nombre prédéfini (N) d'instants de temps se succédant ou si la condition d'anomalie du capteur de rayonnement IR (26) est confirmée.

**13.** Procédé de mesure (50) selon la revendication 12, dans lequel l'étape de vérifier (S30-S32) la condition d'anomalie du capteur de distance (24) comprend :

de calculer (S30), en se basant sur les valeurs ($S_{d,i}$, $T_{object,i}$) du signal de distance ($S_d$) et du signal de température ($T_{object}$) acquis dans le mode étalonné (50b), une erreur de signal de distance ($D_{err}$) indicative d'une différence en valeur absolue entre une valeur de distance estimée ($D_{object,i}$) déterminée en partant de la valeur ($T_{object,i}$) du signal de température ($T_{object}$), et une valeur de distance mesurée ($D_{d,i}$) corrélée à la valeur ($S_{d,i}$) du signal de distance ($S_d$) ; et

de vérifier (S32) si l'erreur de signal de distance ($D_{err}$) est supérieure à un seuil d'erreur de signal de distance ($D_{err,th}$),

dans lequel l'étape de vérifier (S34, 36) la condition d'anomalie du capteur de rayonnement IR (26) comprend :

de calculer (S34) en se basant sur la valeur ($T_{object,i}$) du signal de température ($T_{object}$) acquis dans le mode étalonné (50b), une différence de signal de température minimum ($T_{object,mindist}$) indicative d'une différence minimum entre une pluralité de différences calculées en valeur absolue entre la valeur ($T_{object,i}$) du signal de température ($T_{object}$) et une pluralité respective de valeurs stockées ($T_{buffer,k}$) du signal de température ($T_{object}$), qui sont stockées dans la mémoire tampon ; et

de vérifier (S36) si la différence de signal de température minimum ($T_{object,mindist}$) est supérieure à un seuil de différence de signal de température minimum ($T_{object,th}$),

dans lequel l'étape de vérifier (S38, S52) si la condition d'anomalie du capteur de distance (24) est confirmée pour le nombre prédéfini (N) d'instants de temps comprend :

a. d'acquérir (S38) de nouvelles valeurs ($S_{d,i}$, $T_{object,i}$) du signal de distance ($S_d$) et du signal de température ($T_{object}$) respectivement par le capteur de distance (24) et le capteur de rayonnement IR (26), de déterminer (S40) la distance (D) à nouveau en se basant sur la nouvelle valeur ($T_{object,i}$) du signal de température ($T_{object}$) et la courbe d'étalonnage ($C_c$), de calculer (S42) l'erreur de signal de distance ($D_{err}$) à nouveau en se basant sur les nouvelles valeurs ($S_{d,i}$, $T_{object,i}$) du signal de distance ($S_d$) et du signal de température ($T_{object}$) ;

b. de vérifier (S44) si la nouvelle erreur de signal de distance ($D_{err}$) est supérieure au seuil d'erreur de signal de distance ($D_{err,th}$) ;

c. si la nouvelle erreur de signal de distance ($D_{err}$) n'est pas plus grande que le seuil d'erreur de signal de distance ($D_{err,th}$), de mettre à jour (S46) un indice de comptage (n) en réduisant sa valeur et de vérifier (S48) si l'indice de comptage (n) prend une valeur minimum prédéfinie ;

d. si l'indice de comptage (n) ne prend pas la valeur minimum prédéfinie, de répéter les étapes a-d ;

e. si la nouvelle erreur de signal de distance ($D_{err}$) est supérieure au seuil d'erreur de signal de distance ($D_{err,th}$), de mettre à jour (S50) l'indice de comptage (n) en augmentant sa valeur et de vérifier (S52) si l'indice de comptage (n) prend une valeur maximum prédéfinie corrélée au nombre prédéfini (N) ;

f. si l'indice de comptage (n) ne prend pas la valeur maximum prédéfinie, de répéter les étapes a-f, et

dans lequel l'étape de mettre à jour (S54-S56) la courbe d'étalonnage ($C_c$) est réalisée si l'indice de comptage (n) prend la valeur maximum prédéfinie.

**14.** Procédé de mesure (50) selon la revendication 8 et l'une quelconque des revendications 10-13, dans lequel l'étape de mettre à jour (S54-S56) la courbe d'étalonnage ($C_c$) comprend :

de stocker (S54) dans la mémoire tampon une nouvelle paire de valeurs ($S_{d,i}$, $T_{object,i}$) du signal de distance ($S_d$) et du signal de température ($T_{object}$) en remplacement de la paire la plus vieille de valeurs ($S_{d,i}$, $T_{object,i}$) présentes dans la mémoire tampon ; et

de recalculer (S56) la courbe d'étalonnage ($C_c$) par interpolation réalisée en se basant sur les paires de valeurs ($S_{d,i}$, $T_{object,i}$) du signal de distance ($S_d$) et du signal de température ($T_{object}$) stockées dans la mémoire tampon mise à jour.

**15.** Produit de programme informatique pouvant être stocké dans une unité de commande (22) d'un dispositif de mesure (20) ;
le produit de programme informatique étant conçu de telle manière que, quand il est exécuté, l'unité de commande (22) devient configurée pour mettre en œuvre un procédé de mesure (50) selon l'une quelconque des revendications 7-14.

FIG. 1

FIG. 2

FIG. 3

FIG. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3433571 A1
- EP 2959459 A1
- JP 2014149761 A